# EUROPÄISCHE PATENTANMELDUNG

(11) **EP 3 889 581 A1**
(43) Veröffentlichungstag der Anmeldung: **06.10.2021**
(21) Anmeldenummer: 20166718.5
(22) Anmeldetag: 30.03.2020
(51) Int. Cl.: G01N 21/41, G01M 11/00

(54) **VERFAHREN ZUR ERMITTLUNG DES BRECHZAHLPROFILS EINES ZYLINDERFÖRMIGEN OPTISCHEN GEGENSTANDES**

(71) Anmelder: Heraeus Quarzglas GmbH & Co. KG, 63450 Hanau (DE)
(72) Erfinder: SCHMITT, Maximilian, 63450 Hanau (DE)
(74) Vertreter: Staudt, Armin Walter

(57) **Zusammenfassung**

Bei einem bekannten Verfahren zur Ermittlung eines Brechungsindexprofils eines optischen Gegenstandes, der eine zylinderförmige Oberfläche und eine Zylinder-Längsachse aufweist, sind die folgenden Verfahrensschritte vorgesehen: (a) Abscannen der zylinderförmigen Oberfläche des Gegenstandes an mehreren Abtastorten mittels senkrecht zur Zylinder-Längsachse auftreffender optischer Strahlen; (b) Erfassen einer Strahlen-Intensitätsverteilung der im optischen Gegenstand abgelenkten optischen Strahlen mittels eines optischen Detektors (7; 8); (c) Bestimmen der Ablenkwinkel der Strahlen nullter Ordnung aus der Strahlen-Intensitätsverteilung, umfassend ein Eliminieren von Ablenkwinkeln von Strahlen höherer Ordnung aus der Strahlen-Intensitätsverteilung, und (d) Berechnen des Brechungsindexprofils des Gegenstandes basierend auf den Ablenkwinkeln der Strahlen nullter Ordnung. Um hiervon ausgehend eine Methode zur Ermittlung des Brechzahlprofils eines zylinderförmigen transparenten und mit periodischen Schichten behafteten Gegenstandes anzugeben, das ohne oder mit wenig Vorab-Informationen über den Gegenstand und dessen Herstellung auskommt, wird vorgeschlagen, dass das Eliminieren von Ablenkwinkeln von Strahlen höherer Ordnung eine Maßnahme umfasst, bei der die Verfahrensschritte (a) und (b) jeweils mit Strahlung unterschiedlicher Wellenlänge durchgeführt werden.

## Beschreibung

### Technischer Hintergrund

Die Erfindung betrifft ein Verfahren zur Ermittlung eines Brechungsindexprofils eines optischen Gegenstandes, der eine zylinderförmige Oberfläche und eine Zylinder-Längsachse aufweist, mit folgenden Verfahrensschritten:
(a) Abscannen der zylinderförmigen Oberfläche des Gegenstandes an mehreren Abtastorten mittels senkrecht zur Zylinder-Längsachse auftreffender optischer Strahlen,
(b) Erfassen einer Strahlen-Intensitätsverteilung der im optischen Gegenstand abgelenkten optischen Strahlen mittels eines optischen Detektors,
(c) Bestimmen der Ablenkwinkel der Strahlen nullter Ordnung der Strahlen-Intensitätsverteilung, umfassend ein Eliminieren von Ablenkwinkeln von Strahlen höherer Ordnung aus der Strahlen-Intensitätsverteilung, und
(d) Berechnen des Brechungsindexprofils des Gegenstandes basierend auf den Ablenkwinkeln der Strahlen nullter Ordnung.

Derartige zylinderförmige optische Gegenstände sind beispielsweise Faser-Vorformen, optische Fasern, Lichtleiter oder Zylinderlinsen. Eine der wichtigen Eigenschaften derartiger Gegenstände ist ihre Brechzahl (der Brechungsindex) und dessen räumliche Verteilung, insbesondere die radiale Brechzahlverteilung, die im Folgenden auch als "Brechzahlprofil" bezeichnet wird. So bestimmt beispielsweise das Brechzahlprofil der Faser-Vorform die Wellenleitereigenschaften der daraus gezogenen optischen Faser.

Zur geräteunterstützen Analyse des Brechzahlprofils werden sogenannte Preform-Analyzer eingesetzt. Dabei wird ein fokussierter optischer Strahl (im Folgenden auch als "Lichtstrahl" bezeichnet) quer zur Zylinderlängsachse des zu messenden optischen Gegenstandes, wie etwa einer Vorform für optische Fasern, rasterweise durch einen Querschnitt des Gegenstandes geführt und der Ablenkwinkel des aus dem Gegenstand austretenden, gebrochenen Lichtstrahls bezogen auf die Strahlrichtung am Auftreffort gemessen. Das rasterweise Durchleuchten des Querschnitts wird hier als "Abscannen" bezeichnet. Die Schar, der beim Abscannen des Lichtstrahls senkrecht zur Zylinderlängsachse gemessenen unterschiedlichen Ablenkwinkel wird als "Ablenkwinkelverteilung" bezeichnet. Aus den transversalen Messdaten der Ablenkwinkelverteilung kann das Brechzahlprofil im durchleuchteten Volumenbereich rekonstruiert werden.

### Stand der Technik

Ein derartiges Verfahren zur Rekonstruktion des radialen Brechzahlprofils einer zylinderförmigen optischen Vorform aus einer Ablenkwinkelverteilung und der dazugehörigen Auftreffort, ist aus der EP 3 315 948 A1 bekannt. Dabei wird die gemessene Ablenkwinkelverteilung durch Analyse und Bestimmung von Extremwerten aufbereitet, wie sie beispielsweise an den Außenkanten des Kerns oder einer Mantelschicht der Vorform auftreten.

Eine exakte Bestimmung des Brechzahlprofils eines optischen Gegenstandes wird durch Brechzahlschwankungen im mikroskopischen Maßstab erschwert. Derartige Brechzahlschwankungen zeigen sich in Form von Schlieren oder Schichten, die sich bei der Herstellung von synthetischem Glas durch schichtweises Abscheiden von Rußpartikeln (Soot) aus der Gasphase bilden. Verfahren zum schichtweisen Abscheiden sind unter den Bezeichnungen OVD (Outside Vapor Deposition), MCVD (Modified Chemical Vapor Deposition), PECVD (Plasma Enhanced Chemical Vapor Deposition), POD (Plasma Outside Deposition) und VAD (Vapor Axial Deposition) bekannt.

Die Schichten wirken als lichtdurchlässiges Beugungsgitter, an dem der den Gegenstand durchdringende Lichtstrahl zusätzlich gebeugt wird. Wenn die Schichtabstände in der Größenordnung der Wellenlänge des Lichtstrahls liegen, kann der Lichtstrahlmit den Schichten wechselwirken und zu weiteren stärker oder schwächer gebeugten optischen Strahlen unterschiedlicher Beugungsordnungen aufspalten. Jeder dieser weiteren Lichtstrahlen kann wiederum im weiteren Strahlengang zusätzliche Beugung erfahren, was zu Beugungsunschärfen durch unterschiedliche Ablenkwinkel und Austrittsorte aus dem optischen Gegenstand führt. Infolge dieser Strahlendiffraktion wird für jeden Ausgangs-Lichtstrahl ein komplexes Ablenkungsmuster erhalten, das den lediglich gebrochenen aber nicht zusätzlich gebeugten primären Strahl (Strahl nullter Ordnung) und durch Diffraktion zusätzlich gebeugte Strahlen höherer Ordnung umfasst. Dabei kann der Ablenkwinkel der gebeugten Strahlen gegenüber dem des ungebeugten Strahls klein sein, so dass die jeweiligen Austrittsorte nahe nebeneinander liegen oder sich überlappen. Wenn die strahlendiffraktiven Effekte die Ablenkwinkelverteilung dominieren, kann die Intensität der höheren Beugungsmoden die Intensität der primären Beugungsmode sogar überschreiten. Gegebenenfalls ist es schwierig, wenn nicht gar unmöglich, das Brechzahlprofil aus der Ablenkwinkelverteilung zu rekonstruieren, wobei der Grad, in dem die Schichten die Analyse des Gegenstandes beeinträchtigen, von Abstand und Amplitude der Schichten abhängt.

Die strahlendiffraktiven Effekte können verringert werden, wenn die Messwellenlänge erhöht wird. Daher schlägt die US 5,396,323 A eine Brechzahlprofil-Analysetechnik vor, bei der zur Messung der Ablenkwinkelverteilung ein Lichtstrahl mit einer langen Messwellenlänge von beispielsweise 3395 nm verwendet wird, also im infraroten Spektralbereich.

Aus der US 2016/123873 A1 ist ein Verfahren zur Messung eines Brechzahlprofils eines zylinderförmigen Glaskörpers gemäß der eingangs genannten Gattung bekannt. Ziel ist die Vermessung von Glaskörpern mit starken Schlieren. Hierzu wird die zylinderförmige Oberfläche des Glaskörpers unter Verwendung eines kollimierten optischen Strahls, der von einem beleuchteten Spalt ausgeht, an mehreren Abtastorten abgescannt und der beleuchtete Spalt jeweils auf einer Abbildungsebene hinter dem Glaskörper fokussiert. Mittels mindestens eines Detektors wird das Abbild des beleuchteten Spalts erfasst und es werden diejenigen Austrittsorte identifiziert, an denen die optischen Strahlen nullter Ordnung auftreffen, nachdem sie ausgehend von Abtastorten den verdichteten Glaskörper passiert haben.

In der Abbildungsebene haben alle optischen Strahlen, die aus dem Glaskörper austreten ihre kleinste Größe. Durch die Erfassung der Abbildung des beleuchteten Spaltes in der Abbildungsebene, können die Strahlen nullter Ordnung leichter von den gebeugten Strahlen höherer Ordnung unterschieden werden.

Aus den Datenpaaren der Abtast- und Austrittsorte werden die Ablenkwinkel der Strahlen nullter Ordnung und eine bereinigte Ablenkwinkelverteilung der optischen Strahlen nullter Ordnung bestimmt. Mittels der Abel-Transformation wird aus der bereinigten Ablenkwinkelverteilung das Brechzahlprofil des Glaskörpers rekonstruiert.

### Technische Aufgabenstellung

Beim bekannten Messverfahren werden die mittels der Kamera erfassten Intensitäten von Strahlen höherer Ordnung eliminiert. Das Eliminieren umfasst eine Prädiktion einer Strahlenbahn des Strahls nullter Ordnung durch den zu vermessenden Glaskörper für jeden Abtastort. Diese Prädiktion basiert auf dem Abtastort des auftreffenden optischen Strahls auf der zylinderförmigen Oberfläche und dem Ort, an dem erwartet wird, dass der Strahl nullter Ordnung auf dem optischen Detektor auftrifft. Darauf beruhend werden die Analysedaten für gebeugte Strahlen höherer Ordnung, die vom Detektor detektiert worden sind, verworfen.

Zur Identifizierung der Austrittsorte der optischen Strahlen nullter Ordnung werden zwei Kameras eingesetzt, die mittels eines Strahlteilers das Abbild des Spalts gleichzeitig erfassen können. Die Positionen der Objektebenen der Kameras werden individuell so eingestellt, dass die eine Objektebene vor der Abbildungsebene und die andere Objektebene hinter der Abbildungsebene des beleuchteten Spalts liegt. Da aber keine der Objektebenen der Kameras sich exakt in der Abbildungsebene befindet, erfassen die Kameras ein mindestens geringfügig verzerrtes Abbild des Spalts.

Um die ungefähre Auftreffposition des Strahls nullter Ordnung vorab zu bestimmen, wird ein Vor-Scan durchgeführt. Dabei wird eine Referenzvorform mit ähnlicher Größe und ähnlichem Brechungsindexprofil vermessen. Die Position der Mittelachse des Strahls nullter Ordnung, die beim Vorab-Scan gefunden wurde, wird zum Einstellen der Mittelposition des Kamera-Aufnahmefensters verwendet und es wird sichergestellt, dass die Mitte des Strahls nullter Ordnung ungefähr in dem Aufnahmefenster zentriert ist, in dem die Daten analysiert werden. Eine Alternative zum Vor-Scannen besteht darin, bereits vorhandenes Wissen über den Glaskörper und die allgemeine Form der Ablenkwinkelfunktion zu verwenden, um den erwarteten Ort des Strahls nullter Ordnung zu bestimmen.

Als Strahlenquelle wird beispielsweise eine Laserdiode eingesetzt. Die Messwellenlänge der Strahlung liegt im sichtbaren Wellenlängenbereich oder im Nahen Infrarot (NIR) oder im Mittleren Infrarot (MIR). Im Vergleich zu NIR-Strahlung wird bei Einsatz von MIR-Strahlung von beispielsweise 3,39 µm der Beugungswinkel der Strahlen höherer Ordnung vergrößert, so dass die Intensitätssignale des Strahls nullter Ordnung einen größeren Abstand von denen des gebeugten Strahls höherer Ordnung erhalten und die benachbarten Signale daher von der Kamera leichter aufgelöst werden können. Andererseits ist das Signal-Rausch-Verhältnis thermischer Detektoren für die Erfassung von MIR-Strahlung grundsätzlich schlechter als das von NIR-Detektoren und Detektoren für sichtbares Licht. Letztlich wird der Einsatz von MIR-Strahlung empfohlen, wenn die periodischen Schichten im zu vermessenden Glaskörper einen vergleichsweise großen Abstand von beispielsweise 14,1 µm haben, und der Einsatz von NIR-Strahlung wird empfohlen, wenn die periodischen Schichten im zu vermessenden Glaskörper einen vergleichsweise kleinen Abstand von beispielsweise 6,7 µm haben.

Für die Prädiktion einer Strahlenbahn und für die geeignete Auswahl der Messwellenlänge erfordert das bekannte Messeverfahren Hintergrundwissen über den zu vermessenden Glaskörper beziehungsweise über dessen Herstellung.

Die Identifizierung der Austrittsorte der optischen Strahlen nullter Ordnung anhand zweier Kameras ist konstruktiv aufwändig und erfordert einen hohen Aufwand für Justierung und Verarbeitung der erfassten Daten.

Der Erfindung liegt daher die Aufgabe zugrunde, eine Methode zur Ermittlung des Brechzahlprofils eines zylinderförmigen transparenten und mit periodischen Schichten behafteten Gegenstandes anzugeben, das ohne oder mit wenig Vorab-Informationen über den Gegenstand und dessen Herstellung auskommt.

Außerdem liegt der Erfindung die Aufgabe zugrunde, die Bestimmung der Ablenkwinkelverteilung konstruktiv möglichst einfach zu gestalten, einschließlich des Identifizierens des Strahls nullter Ordnung und des Eliminierens der Signale von Strahlen höherer Ordnung.

### Zusammenfassung der Erfindung

Diese Aufgabe wird ausgehend von einem Verfahren der eingangs genannten Gattung erfindungsgemäß dadurch gelöst, dass das Eliminieren von Ablenkwinkeln von Strahlen höherer Ordnung eine Maßnahme umfasst, bei der die Verfahrensschritte (a) und (b) jeweils mit Strahlung unterschiedlicher Wellenlänge durchgeführt werden.

Beim erfindungsgemäßen Verfahren wird der zu messende optische Gegenstand nacheinander mit mindestens zwei Lichtstrahlen unterschiedlicher Wellenlänge abgescannt. Dabei wird eine erste Intensitätsverteilung des ersten abgelenkten Lichtstrahls und mindestens eine weitere, zweite Intensitätsverteilung des zweiten abgelenkten Lichtstrahls erhalten. Die beiden Intensitätsverteilungen unterscheiden sich voneinander in der Position der Intensitätssignale für die Strahlen höherer Ordnung, während das Intensitätssignal für den Strahl nullter Ordnung in den Intensitätsverteilungen im Wesentlichen gleich ist. Grund dafür ist die Wellenlängenabhängigkeit des oben beschriebenen strahlendiffraktiven Effekts. Die Beugung an den mikroskopischen Brechzahlschwankungen ist bei der ersten Messwellenlänge anders als bei der zweiten Messwellenlänge, wohingegen die Brechung des Lichtstrahls im Gegenstand nahezu unabhängig von der Wellenlänge ist. Durch Vergleich der Positionen von Intensitätsmaxima der gemessenen Intensitätsverteilungen des ersten und des zweiten Lichtstrahls können Intensitäten von Strahlen höherer Ordnung als solche anhand ihrer relativen Verschiebung identifiziert und eliminiert werden.

Vorab-Informationen über die innere Struktur des zu vermessenden optischen Gegenstands, und insbesondere Kenntnisse über die Periodizität der Schichten oder eine Prädiktion einer Strahlenbahn sind zum Identifizieren und Eliminieren der Ablenkwinkel von Strahlen höherer Ordnung nicht erforderlich.

Bei einer bevorzugten Verfahrensweise werden die Verfahrensschritte (a) und (b) mit Strahlung einer ersten Wellenlänge durchgeführt, wobei im Verfahrensschritt (b) ein erstes ortsabhängiges Licht-Intensitätsprofil erhalten wird, und die Verfahrensschritte (a) und (b) werden mit Strahlung mindestens einer zweiten Wellenlänge durchgeführt, wobei im Verfahrensschritt (b) mindestens ein zweites ortsabhängige Licht-Intensitätsprofil erhalten wird, und wobei ortsgleiche Intensitätswerte des ersten und zweiten Licht-Intensitätsprofils mathematisch miteinander verarbeitet werden.

Die mathematische Verarbeitung ist vor allem an denjenigen Positionen des Licht-Intensitätsverteilung wichtig, an denen der Intensitätsverlauf uneindeutig ist. Dies ist bei optischen Vorformen beispielsweise regelmäßig im Bereich von Übergängen oder Sprüngen des Brechungsindex der Fall. Hier kann die Licht-Intensität eine ausgeprägt strukturierte und breit aufgefächerte Verteilung zeigen. Die Lichtverteilung quer zur Auffächerung wird hier als "Licht-Intensitätsprofil" bezeichnet.

Die mathematische Verarbeitung ortsgleicher Intensitätswerte umfasst eine oder mehrere mathematische Operationen mit dem Ziel, Signale basierend auf Ablenkwinkel von Strahlen höherer Ordnung zu maskieren. Die mathematische Operation umfasst vorzugsweise die Verarbeitung der Schnittmengen von ortsgleichen Intensitätswerten, insbesondere mindestens eine Multiplikation und/oder mindestens eine Addition der ortsgleichen Intensitätswerte des ersten und zweiten Licht-Intensitätsprofils. Durch Multiplikation ergibt sich das Produkt der ortsgleichen Intensitätswerte also quasi das Produkt der Schnittmenge, das sehr klein sein kann, wenn mindestens einer der Faktoren sehr klein ist. Durch Addition ergibt sich die Summe der ortsgleichen Intensitätswerte, also quasi die Vereinigungsmenge, die ebenfalls verhältnismäßig klein sein kann, wenn beide Summanden klein sind oder mindestens einer der Summanden klein ist.

Ergebnis der mathematischen Verarbeitung ist ein aufbereitetes Licht-Intensitätsprofils mit vergleichsweise kleinen Intensitätswerten im Bereich mit nennenswerter relativer Verschiebungen in den Ablenkwinkeln, und mit hohen Intensitätswerten im Bereich ohne oder mit allenfalls geringer Verschiebung, also im Bereich der ortsstabilen Ablenkwinkel des Strahls nullter Ordnung.

Um die Detektionsgenauigkeit des Strahls nullter Ordnung weiter zu verbessern, kann das Eliminieren von Ablenkwinkeln von Strahlen höherer Ordnung eine Maßnahme umfassen, bei der Intensitätswerte der ersten, des zweiten und/oder eines aufbereiteten Licht-Intensitätsprofils, die einen Intensität-Schwellwert unterschreiten, ganz oder teilweise eliminiert werden.

Ein aufbereitetes Licht-Intensitätsprofil wird beispielsweise erhalten, indem die ortgleichen Intensitätswerte des ersten und des zweiten Licht-Intensitätsprofils einer mathematischen Operation unterzogen werden, wie oben erläutert. Durch den Intensitäts-Schwellwertfilter werden Intensitätssignale mit niedrigem Pegel rechnerisch unterdrückt oder entfernt. Vorzugsweise werden alle Intensitätswerte unterhalb des Schwellenwerts verworfen, bevor der Ablenkwinkel des Strahls nullter Ordnung bestimmt wird.

Der Intensität-Schwellwert wird dabei vorzugsweise auf einen Wert gesetzt, der weniger als 20%, vorzugsweise weniger als 15%, eines maximalen Intensitätswertes des Licht-Intensitätsprofils beträgt.

Bei hohen festen Schwellwerten, beispielsweise, oberhalb von 20% des Maximalwertes, geht möglicherweise wichtige Informationen verloren. Daher sind konstante Schwellwerte grundsätzlich nur so hoch wie benötigt zu wählen.

Bei einer besonders bevorzugten Verfahrensvariante wird zum Erfassen der Strahlen-Intensitätsverteilung gemäß Verfahrensschritt (b) als optischer Detektor eine Zeilenkamera mit nur einem lichtempfindlichen Zeilensensor eingesetzt.

Im Vergleich zu einem Flächensensor ist die von einem Zeilensensor bei gleicher Auflösung erzeugte Datenmenge wesentlich geringer und kann schneller ausgelesen und verarbeitet werden.

Der Zeilensensor hat vorteilhafterweise eine Länge, die zur Erfassung der gesamten Ablenkwinkel des Gegenstandes in einem einzigen Scanvorgang ausreicht. Zeilensensoren mit einer Länge von mindestens 40 mm, vorzugsweise mindestens 60 mm haben sich dafür bewährt.

Je länger die Sensorzeile ist, umso größere Ablenkwinkel lassen sich abbilden, das heißt: umso größere Brechzahlsprünge im Brechungsindexprofil können erfasst werden. Zeilensensoren mit einer Länge von mehr als etwa 80 mm sind in der Regel nicht erforderlich, da mittels einer Optik vor der Zeilenkamera auch eine verkleinerte Abbildung auf den Zeilensensor realisierbar ist, allerdings unter Inkaufnahme von Auflösungseinbußen.

Die zu verarbeitende Datenmenge wird besonders geringgehalten, wenn auf eine farbliche Auflösung verzichtet und - wie bei der hier bevorzugten Verfahrensweise - ein monochromatischer Zeilensensor eingesetzt wird.

Die zu verarbeitende Datenmenge wird weiter reduziert, wenn der Zeilensensor mit einer niedrigen Farbtiefe betrieben wird, wie beispielsweise mit einer Farbtiefe von 8 Bit. Die 8-Bit Farbtiefe ermöglicht bei geringem Datenaufkommen eine für die vorliegende Anwendung ausreichende Auflösung von 256Helligkeitswerten.

Zum Abscannen der Oberfläche des optischen Gegenstandes wird in der Regel ein fokussierter optische Strahl eingesetzt. Die Fokussierung erfolgt typischerweise mittels konvexer Linsen. Dabei hängt die Fokuslage jedoch von der Wellenlänge der Messstrahlung ab. Da beim Verfahren unterschiedliche Messwellenlängen eingesetzt werden, müssen bei einer Fokussierung mittels konvexer Linse Kompensierungsmaßnahmen getroffen werden, um eine konstante Fokuslage zu erreichen. Alternativ und bevorzugt wird zum Abscannen der zylinderförmigen Oberfläche gemäß Verfahrensschritt (a) der optische Strahl mittels Parabolspiegeln fokussiert.

Ein Parabolspiegel, besonders bevorzugt ein sogenannter Off-Axis-Parabolspiegel, ermöglicht eine dispersionsunabhängige Fokussierung der optischen Strahlen unterschiedlicher Wellenlänge.

Bei einer bevorzugten Verfahrensweise werden die Verfahrensschritte (a) und (b) mit Strahlung einer ersten Wellenlänge und mindestens einer zweiten Wellenlänge durchgeführt, wobei sich die erste Wellenlänge und die zweite Wellenlänge um mindestens 50 nm und um maximal 400 nm, und vorzugsweise um mindestens 80 nm und um maximal 300 nm voneinander unterscheiden.

Bei einer anderen bevorzugten Verfahrensvariante werden die Verfahrensschritte (a) und (b) mit Strahlung der ersten Wellenlänge, der zweiten Wellenlänge und einer dritten Wellenlänge durchgeführt, wobei die dritte Wellenlänge länger als die erste und kürzer als die zweite Wellenlänge ist, und sich die dritte Wellenlänge von der ersten und von der zweiten Wellenlänge um mindestens 50 nm und um maximal 400 nm, und vorzugsweise um mindestens 80 nm und um maximal 300 nm unterscheidet.

Bei Einsatz von drei unterschiedlichen Wellenlängen ergibt sich der praktische Vorteil, dass Farbbilder herkömmlich mit drei Farbkanälen gespeichert und vor allem auch verarbeitet werden. Daher können zur Auswertung der Intensitätssignale traditionelle Methoden der Bildverarbeitung angewandt werden.

Je größer der Wellenlängenunterschied benachbarten Wellenlängen ist, umso ausgeprägter ist die Verschiebung der Ablenkwinkel der Strahlen gleicher höherer Ordnung. Andererseits ist es vorteilhaft, wenn ein und derselbe Detektor für beide Wellenlängen einsetzbar ist, was am einfachsten durch vergleichsweise geringe Wellenlängenunterschiede technisch realisierbar ist.

Die Verfahrensschritte (a) und (b) werden vorzugsweise seriell mit Strahlung der ersten Wellenlänge und anschließend mit Strahlung der zweiten Wellenlänge durchgeführt

Dabei besagen die Begriffe "erste" und "zweite" Wellenlänge nichts darüber, welcher der Wellenlängen die kürzere oder die längere ist. Die serielle Verarbeitung erleichtert die Auswertung der Intensitätsdaten durch serielle mathematische Verrechnung.

Es hat sich eine Verfahrensweise bewährt, bei der die unterschiedlichen Wellenlängen im Wellenlängenbereich von 400 bis 1.600 nm, und vorzugsweise unterhalb von 1.100 nm liegen.

Für Messwellenlängen im Sichtbaren Wellenlängenbereich und im Nahen Infrarotbereich bis maximal 1.600 nm, bevorzugt maximal 1.100 nm ergibt sich ein ausreichend gutes Signal-Rausch-Verhältnis und es stehen Lichtquellen und Detektoren zur Verfügung. Der Nahe Infrarote Wellenlängenbereich beginnt definitionsgemäß bei etwa 780 nm.

Einerseits ist ein Mindestabstand zwischen benachbarten Messwellenlängen erforderlich, damit die Verschiebung der Ablenkwinkel der gleichen höheren Ordnung, beispielsweise der jeweils ersten Ordnung, und damit die Aufspaltung der entsprechenden Intensitäten sichtbar wird. Allerdings kann die Zuordnung eines Ablenkwinkels zu einer bestimmten Messwellenlänge erschwert werden, wenn der Ablenkwinkel einer höheren Ordnung der einen Messwellenlänge mit dem Ablenkwinkel einer anderen höheren Ordnung der anderen Messwellenlänge näherungsweise zusammenfällt. Ein solches "näherungsweises Zusammenfallen" kann sich beispielsweise ergeben, wenn die betreffenden Messwellenlängen ein etwa gleiches kleinstes gemeinsames Vielfaches haben. Als "ungefähr gleich" wird hiermit eine Wellenlängendifferenz von weniger als 40 nm definiert. Die Gefahr eines solchen "näherungsweises Zusammenfallens" von gebeugten Strahlen unterschiedlichen höheren Ordnungen (bis maximal zu dritten Ordnung) wird verringert, wenn mindestens eine der Messwellenlängen aus einem Wellenlängenbereich gewählt wird, der nahe an der oberen Grenze der spektralen Empfindlichkeit des Detektors liegt. Diese Voraussetzungen sind regelmäßig erfüllt, für Messwellenlängen im Sichtbaren Wellenlängenbereich und im Nahen Infrarotbereich bis maximal 1.600 nm, bevorzugt maximal 1.100 nm, und bei einer spektralen Empfindlichkeit des Detektors in diesem Wellenlängenbereich. Bei einem bevorzugten Ausführungsbeispiel sind die unterschiedlichen Wellenlängen ausgewählt aus den Wellenlängenbereichen: 630±50 nm, 840±50 nm, 970 ±50 nm, 1040 ±50 nm und 1550±50 nm.

Es hat sich auch als vorteilhat erwiesen, wenn die Strahlen beim Abscannen der zylinderförmigen Oberfläche des Gegenstandes auf einen Punkt im optischen Gegenstand fokussiert werden Bei Fokussierung auf einen Punkt im Volumen des zylinderförmigen Gegenstandes, beispielsweise auf die Zylinder-Längsachse können scharfe Übergänge in Form von Brechzahlsprüngen besser abgebildet und ausgewertet werden als bei einer Fokussierung außerhalb des Volumens.

Das Eliminieren von Ablenkwinkeln von Strahlen höherer Ordnung aus der Intensitätsverteilung gemäß Verfahrensschritt (b) erfolgt bei einer bevorzugten Verfahrensvariante mittels rechnergestützter Bildverarbeitung.

Abschätzungen über Strahlenverläufe und komplizierte Methoden des Ray-Tracings sind dafür nicht erforderlich.

### Definitionen

Einzelne Verfahrensschritte und Begriffe der obigen Beschreibung werden im Folgenden ergänzend definiert. Die Definitionen sind Bestandteil der Beschreibung der Erfindung. Bei einem sachlichen Widerspruch zwischen einer der folgenden Definitionen und der übrigen Beschreibung ist das in der Beschreibung Gesagte maßgeblich.

### Ablenkwinkelvertei lung

Der Ablenkwinkel Ψ ist definiert als Winkel zwischen dem aus dem zu messenden Gegenstand austretenden Austrittsstrahl und dem in den Gegenstand eintretenden Eintrittsstrahl. Die Schar der beim Scannen des Lichtstrahls senkrecht zur Zylinder-Längsachse (in y-Richtung) gemessenen Ablenkwinkel ergibt die "Ablenkwinkelverteilung".

### Optische Strahlen

Die beim Abscannen auf der Zylinder-Oberfläche des zu vermessenden Gegenstandes auftreffenden optischen Strahlen ergeben sich beispielsweise durch die Verlagerung eines Lichtstrahls, wie etwa eines Laserstrahls.

### Licht-Intensitätsverteilung / Licht-Intensitätsprofil

Als "Licht-Intensitätsverteilung" wird diejenige Lichtverteilung bezeichnet, die der Licht-Sensor beim Abscannen des zu vermessenden optischen Gegenstandes in y-Richtung erfasst. Diese kann infolge Beugungseffekten und Entstehung von gebeugten Strahlen höherer Ordnung eine Auffächerung in x-Richtung aufweisen. Als "Licht-Intensitätsprofil" wird diejenige Lichtverteilung bezeichnet, die der Lichtsensor in x-Richtung (quer zur Auffächerung) erfasst.

### Ausführungsbeispiel

Nachfolgend wird die Erfindung anhand eines Ausführungsbeispiels und einer Zeichnung näher erläutert. In der Zeichnung zeigt im Einzelnen
- **Figur 1:**: eine schematische Darstellung einer Ausführungsform eines Messsystems zur Messung einer Ablenkwinkelverteilung,
- **Figur 2:**: eine Skizze zur Erläuterung der Durchführung der Messung,
- **Figur 3:**: eine Skizze mit ursprünglichen Licht-Intensitätsprofilen des auf eine Zeilenkamera auftreffenden Lichts ((a) und (b)) sowie zur rechnerischen Verarbeitung ((c) und (d)) der ursprünglichen Intensitätsprofile zwecks Eliminierung des Anteils gebeugter Strahlung,
- **Figur 4:**: an einer durch einen OVD-Prozess hergestellten Vorform mit Kern und Mantel gemessene Ablenkwinkelverteilungen für drei unterschiedliche Messwellenlängen,
- **Figur 5:**: Ausschnitte der Ablenkwinkelverteilungen von Figur 4 in vergrößerter Darstellung, und
- **Figur 6:**: ein Diagramm mit einer Gegenüberstellung der ermittelten Brechzahlverteilungen bei einer Auswertung mittels einer Methode nach dem Stand der Technik und der erfindungsgemäßen Methode, bei der störende Beugungen höherer Ordnungen in den Rohdaten identifiziert und eliminiert werden.

Das Verfahren dient zur Ermittlung eines Brechzahlprofils eines zylinderförmigen optischen Gegenstandes, im Ausführungsbeispiel einer mittels OVD-Verfahren erzeugten optischen Vorform zum Ziehen von Lichtleitfasern, die über einen Teilbereich ihres Volumens eine ausgeprägte Schichtstruktur aufweist.

Ein Querschnitt der Vorform wird rasterweise mit einem Lichtstrahl durchleuchtet (abgescannt) und aus dem jeweiligen Auftreffort des Lichtstrahls auf der Zylindermantelfläche der Vorform und dem Auftreffort des Lichtstrahls auf einem optischen Sensor wird der Ablenkwinkel berechnet. Die Schar der Ablenkwinkel der Lichtstrahlen eines Scans bilden die Ablenkwinkelverteilung, aus der das Brechzahlprofil der Vorform rekonstruiert wird.

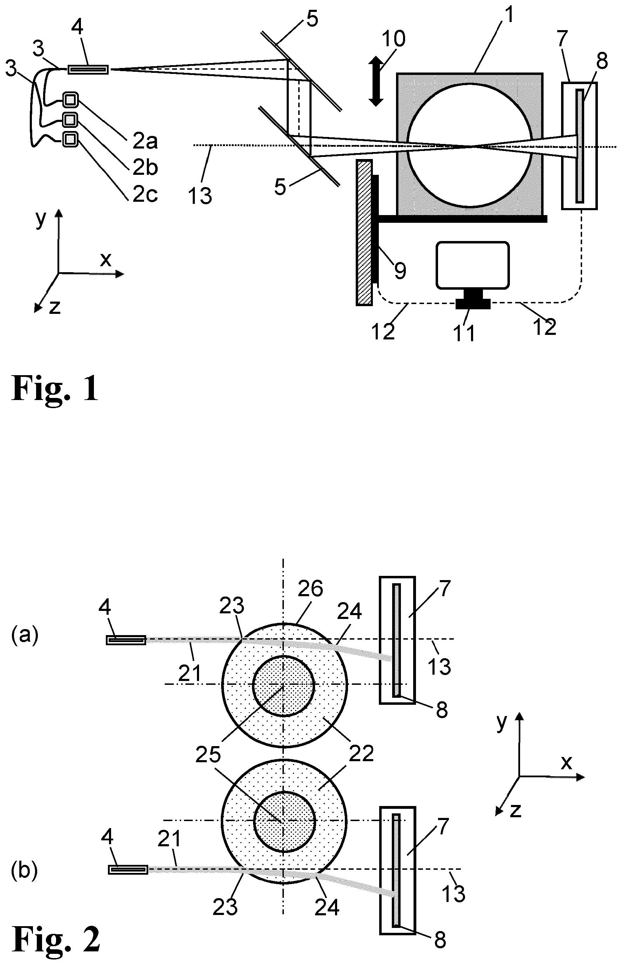

Die Messung der Ablenkwinkelverteilungen erfolgt mittels eines konstruktiven veränderten handelsüblichen Preform-Analyzers P-106 der Firma York Technology Ltd. **Figur 1** zeigt schematisch den optischen Aufbau. Der Analyzer verfügt über eine zylinderförmige Messzelle 1 zur Aufnahme der zu vermessenden Vorform und einer die Vorform umgebenden Immersionsflüssigkeit. Die werksseitig vorgesehene Lichtquelle ist ersetzt durch drei Laserdioden 2a, 2b, 2c mit jeweils spezifischen Emissionswellenlängen von 842 nm (2a), 977 nm (2b) und 1080 nm (2c). Diese Messwellenlängen sind so gewählt, dass innerhalb der Grenzen der spektralen Empfindlichkeit der Zeilenkamera 7 ein "näherungsweises Zusammenfallen" von gebeugten Strahlen unterschiedlicher höherer Ordnungen ausgeschlossen ist.

Die Laserdioden 2a, 2b, 2c mit den unterschiedlichen Emissionswellenlängen sind über zwei Y-Faserbündel 3 mit einem Strahleneingangsbauteil 4 verbunden, das eine Baueinheit mit einer Strahlkonditionierungsoptik 5 bildet. Die Strahlkonditionierungsoptik dient im Wesentlichen der dispersionsunabhängigen Fokussierung der Messstrahlen unterschiedlicher Wellenlänge auf ein und demselben Fokuspunkt. Sie besteht im Wesentlichen aus zwei sogenannten Off-Axis-Parabolspiegeln 5 und ist so konfiguriert, dass sich der Strahlfokus des Lichtstrahls in der y-z-Ebene und in der Zylinderlängsachse der Messzelle 1 befindet. Der aus der Vorform austretende Lichtstrahl trifft auf eine Zeilenkamera 7 mit einem Zeilensensor 8. Die Erstreckungsrichtung des Zeilensensors 8 ist die y-Richtung, wie vom kartesischen Koordinatenkreuz angezeigt. Das Zentrum der Zeilenkamera 7 befindet sich idealerweise auf der optischen Achse 13. Dadurch wird erreicht, dass auch die größtmöglichen Ablenkwinkel in der Ablenkwinkelverteilungen noch vollständig aufgelöst werden können.

Die Zeilenkamera 7 ist eine CMOS-Zeilenkamera mit Monochrom-Sensor, die unter der Bezeichnung UNIIQA+ 16K CL MONOCHROME von der Firma Teledyne e2V im Handel ist. Sie verfügt über eine Sensorlänge von 82 mm und eine horizontale Auflösung von 16384 Pixeln bei einer Pixelgröße von 5 µm und eine Farbtiefe (Helligkeitsauflösung) von 12 Bit, wovon aber nur 8 Bit verwendet werden. Die Zeilenkamera hat im Wellenlängenbereich von 400 nm bis etwa 1100 nm eine ausreichende spektrale Empfindlichkeit.

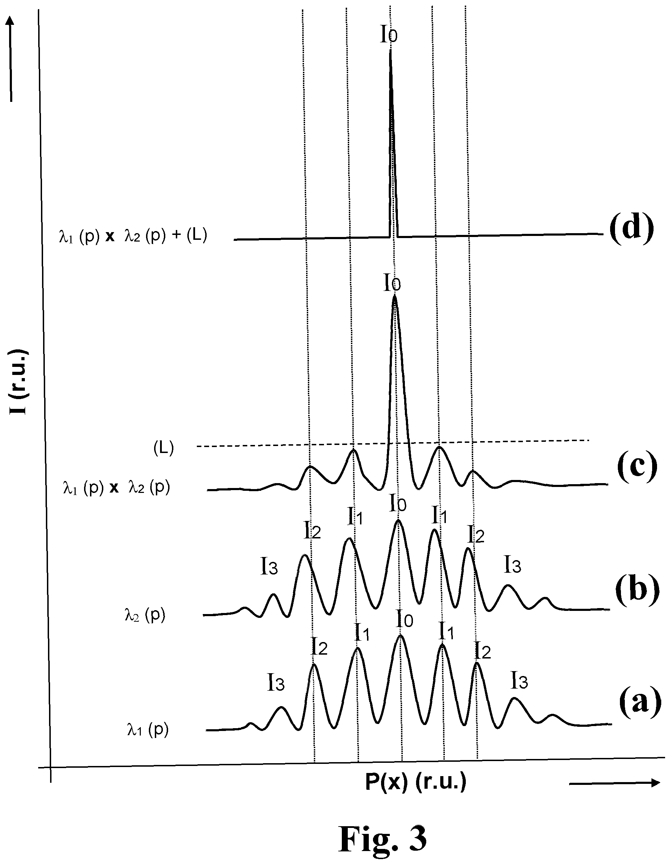

Die in y-Richtung abgelenkten Messstrahlen werden vom der Zeilenkamera 7 detektiert, wobei die dafür notwendige zu verarbeitende Datenmenge trotz der großen Ausdehnung mit der 82 mm langen Sensorlänge überschaubar klein bleibt (um einen Faktor von einigen 1000 kleiner als bei Einsatz einer Flächenkamera). Infolge dieser Sensorlänge kann selbst bei verhältnismäßig großen aufzulösenden Brechzahlsprüngen der Vorform auf etwaige Optiken hinter der Messzelle 1 verzichtet werden. Die Zeilenkamera 7 reduziert den Umfang der auszuwertenden Messdaten auf das Wesentliche, wodurch sich signifikante Verbesserungen in der Performance ergeben. Die Auswertung wird weiter unten anhand der Figuren 3 bis 6 noch näher erläutert.

Die Position der Messzelle 1 ist in Bezug auf die optische Achse 13 veränderbar. Dazu ist die Messzelle 1 auf einem Verschiebetisch 9 montiert und mittels diesem in der anhand des Richtungspfeils 10 angezeigten Richtung (y-Richtung) senkrecht zur optischen Achse 13 verschiebbar. Der Verschiebetisch 9 und die Zeilenkamera 7 sind über Datenleitungen 12 mit einem Rechner 11 verbunden.

**Figur 2** zeigt schematisch den Strahlengang des Lichtstrahls 21 bei in die Messzelle 1 (Figur 1) eingesetzten Vorform 22 bei einer oberen Scanposition (a) und einer unteren Scanposition (b). Der in das Strahleneingangsbauteil 4 eintretende Lichtstrahl 21 trifft auf die zylinderförmige Oberfläche 26 und wird am Eintrittsort 23 in die Vorform 22 in Richtung auf die Vorform-Mittelachse 25 gebrochen. Beim Austritt am Austrittsort 24 wird der Lichtstrahl 21 erneut gebrochen und gelangt auf den Zeilensensor 8 der Zeilenkamera 7. Durch Verschieben der Vorform 22 senkrecht zur optischen Achse 13 in y-Richtung wird der Querschnitt der Vorform 22 vollständig durchleuchtet, so dass auf der Sensorzeile 8 der Zeilenkamera 7 ein Licht-Intensitätsprofil erfasst wird, das sich aus dem abgelenkten, nicht gebeugten Strahl nullter Ordnung und aus abgelenkten und gebeugten Strahlen höherer Ordnung zusammensetzt. Das Licht-Intensitätsprofil wird ausgewertet mit dem Ziel, den Strahl nullter Ordnung zu identifizieren und aus dem Abstand von Eintrittsort 23 und Austrittsort 24 in y-Richtung gesehen, für den jeweiligen Scan die Verteilung der Ablenkwinkel ω(y) für den Strahl nullter Ordnung zu ermitteln.

Zur Identifikation des Strahls nullter Ordnung wird derselbe Vorform-Querschnitt nacheinander mit dem Lichtstrahl aller Laserdioden 2a, 2b, 2c und ihren spezifischen unterschiedlichen Emissionswellenlängen abgescannt (in y-Richtung). Ergebnis sind drei von der Zeilenkamera 8 aufgezeichnete und vom Rechner 11 abgespeicherte ursprüngliche Licht-Intensitätsverteilungen in der Scanrichtung (y-Richtung) und einer Auffächerung der Licht-Intensitätsverteilung in der dazu senkrecht verlaufenden Richtung (x-Richtung), deren Verlauf hier als "Licht-Intensitätsprofil" bezeichnet wird.

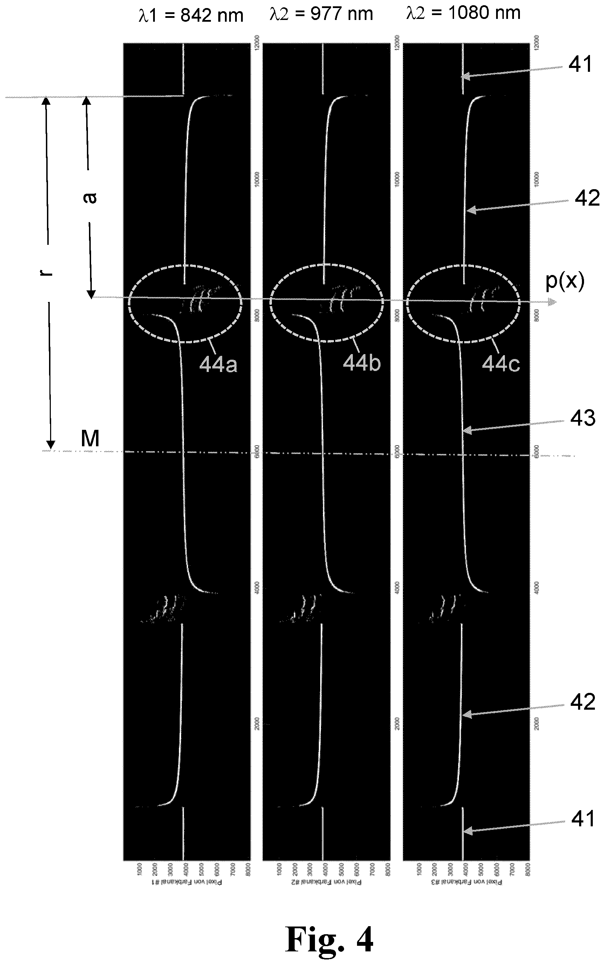

Die drei Aufnahmen von **Figur 4** zeigen jeweils für eine der oben genannten Messwellenlängen (Dioden 2a, 2b, 2c) die von der Zeilenkamera 7 in der x-Richtung erfassten Ablenkwinkelverteilungen anhand von Licht-Intensitätsprofilen 40a, 40b, 40c. Die Licht-Intensitätsprofile 40a, 40b, 40c sind in der Regel in einer einzigen gemeinsamen Aufnahme enthalten; aber hier ist aus Darstellungsgründen für jeden der Farbkanäle eine separate Aufnahme gezeigt. Die Licht-Intensitätsprofile 40a, 40b, 40c umfassen 12000 Pixel in horizontaler und 8000 Pixel in vertikaler Richtung. Die Profile sind weitgehend umgekehrt spiegelsymmetrisch um die Mittellinie M. Jedes der Profile zeigt Profil-Randbereiche 41, die jeweils dem Immersionsöl der Messzelle zuzuordnen ist, Mantel-Bereiche 42, die dem Mantel aus mit Fluor dotierten Quarzglas der zu vermessenden Vorform 22 zuzuordnen sind, sowie einen zentralen Kern-Bereich 43, der dem Kern der Vorform 22 aus undotiertem Quarzglas zuzuordnen ist. Der Radius der Vorform 22 ist mir "r", und der radiale Ortsvektor an der Position a ist mit dem Buchstaben "a" bezeichnet.

An den Übergängen vom Kern-Bereich 43 zu den beiderseits davon befindlichen Mantel-Bereichen 42 (im Bereich der Position a) zeigen die Licht-Intensitätsprofile 40a, 40b, 40c - durch eine Umrahmung markierte - Bereiche 44a, 44b, 44c, die eine ausgeprägt strukturierte und breit aufgefächerte Licht-Intensitätsverteilung in x-Richtung (Richtung der Ortskoordinate p) aufweisen und die keine klare und eindeutige Identifizierung der Ablenkwinkelverteilung in diesem Bereich erlauben. Die Auffächerung der Licht-Intensitätsverteilung beim Übergang vom zentralen Kernbereich in den Mantelbereich entsteht aufgrund von Diffraktion des jeweiligen Lichtstrahls 21 an der Schichtstruktur der Vorform 22. Zur Unterscheidung zwischen der Strahlungs-Intensitätsverteilung in radialer Richtung (y-Richtung) und der aufgefächerten Licht-Intensitätsverteilung in der dazu senkrecht verlaufenden x-Richtung wird Letztere hier auch als "Licht-Intensitätsprofil" bezeichnet.

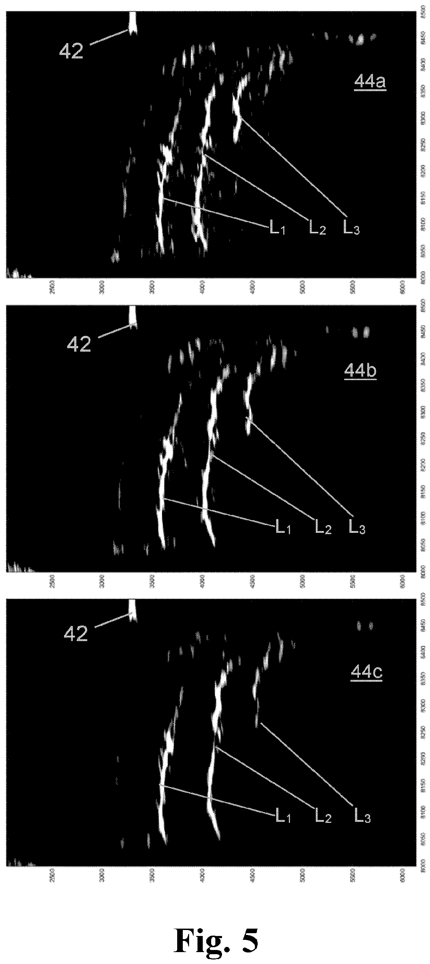

Die Vergrößerung der Bereiche 44a, 44b, 44c in **Figur 5** umfasst den Vertikalpixel-Zahlenbereich von etwa 2500 bis 6000 und den Horizontalpixel-Zahlenbereich von 8000 bis 8500, der dem Mantelbereich 42 zuzuordnen ist. Die Aufnahmen zeigen jeweils mehrere Licht-Intensitätslinien L1, L2; L3, die dem Strahl nullter Ordnung und gebeugten Strahlen höherer Ordnung bei der jeweiligen Messwellenlänge zuzuordnen sind. Bei genauerer Betrachtung ist erkennbar, dass der Abstand zwischen den Licht-Intensitätslinien L1, L2, L3 vom Bereich 44a, über 44b zum Bereich 44c zunimmt. Dies belegt die Wellenlängenabhängigkeit dieses Abstandes, beziehungsweise die Wellenlängenabhängigkeit der Positionen der Ablenkwinkelverteilungen der Strahlen höherer Ordnung. Demgegenüber ist die Position der Ablenkwinkelverteilung des Strahls nullter Ordnung unabhängig von der Messwellenlänge an ein und derselben Position zu finden. Im Ausführungsbeispiel ist dies die Licht-Intensitätslinie L1, die in allen Aufnahmen im Vertikalpixel-Zahlenbereich um 3600 liegt. Auffällig hierbei ist, dass sich die Licht-Intensitätslinie L1 nicht in der Mitte der erscheinenden Beugungsordnungen befindet. Ursache hierfür ist, dass das optische Gitter, an dem die Strahlen gebeugt werden (also die Schlieren- oder Schichtenstruktur der Vorform) nicht ideal ist, sondern gekrümmt und aperiodisch..

Die Positionsunabhängigkeit der Ablenkwinkelverteilung für den Strahl nullter Ordnung, genauer gesagt: die Positionsunabhängigkeit der Licht-Intensitätslinie L₁ ermöglicht die Identifizierung, Maskierung und Eliminierung der übrigen Licht-Intensitätslinien L₂ und L₃ (und etwaiger anderer), wie dies nachfolgend erläutert wird. Die Diagramme der **Figuren 3(a), 3(b)** zeigen schematisch jeweils ein Licht-Intensitätsprofil (λ₁(P), λ₂(P)) für die spezifische Mess-Wellenlängen (λ₁; λ₂) an der radialen Position a/r=1/2. Die integrierte Licht-Intensität I (in relativer Einheit) ist dabei gegen die Ortskoordinate P (in relativer Einheit) entlang der optischen Achse 13 (in x-Richtung) aufgetragen. Die dargestellten Licht-Intensitätsprofile unterscheiden sich voneinander im Wesentlichen in der Position der Intensitätssignale I₁, I₂; I₃ für die gebeugten Strahlen höherer Ordnung. Die Positionen von Intensitätsmaxima von gebeugten Strahlen höherer Ordnung sind relativ zueinander verschoben, während das Intensitätssignal I₀ für den lediglich gebrochenen Strahl nullter Ordnung in den Intensitätsverteilungen im Wesentlichen an der gleichen Position P0 liegt.

**Figur 3(c)** zeigt schematisch ein aufbereitetes Licht-Intensitätsprofil, das erhalten wird, indem ortsgleiche Intensitätswerte des ersten Intensitätsprofils (λ₁(P)) und des zweiten Intensitätsprofils (λ₂(P)) einer mathematischen Operation unterzogen werden. Diese umfasst eine Multiplikation der ortsgleichen Intensitätswerte des ersten und zweiten Intensitätsprofils. Durch die Multiplikation ergibt sich das Produkt der Schnittmenge der ortsgleichen Intensitätswerte, das im Ausführungsbeispiel bei den beiden bereits ursprünglich vergleichsweise hohen Intensitätssignalen I₀ besonders hoch ist, und vergleichsweise klein ist bei den Intensitätssignalen I₁, I₂; I₃. Die nach dem ersten mathematischen Verarbeitungsschritt erhaltene aufbereitete Intensitätsprofil (λ₁(P) x λ₂(P)) hat vergleichsweise kleinen Intensitätswerte im Bereich mit nennenswerter relativer Verschiebungen in den Ablenkwinkeln, und vergleichsweise hohe Intensitätswerte im Bereich ohne oder mit allenfalls geringer Verschiebung, also im Bereich der ortsstabilen Ablenkwinkel des Strahls nullter Ordnung.

Um die Detektionsgenauigkeit des Strahls nullter Ordnung weiter zu verbessern wird das aufbereitete Licht-Intensitätsprofil (λ₁(P), λ₂(P)) einem zweiten mathematischen Verarbeitungsschritt einem Intensitäts-Schwellwertfilter unterworfen, bei dem Intensitätssignale unterhalb eines Pegels L, der bei 10% des Maximalwerts des aufbereiteten Licht-Intensitätsprofils (λ₁(P), λ₂(P)) festgelegt wird, rechnerisch entfernt werden.

**Figur 3(d)** zeigt schematisch das Licht-Intensitätsprofil nach Durchführung dieser mathematischen Operation. Es ist nur noch ein einziger Peak vorhanden, auf Basis von dessen Position Po der Ablenkwinkel des Strahls nullter Ordnung bestimmt und festgelegt wird. Bei dem nach dieser Aufbereitung erhaltenen Licht-Intensitätsprofil ist die aufgrund von Diffraktion des Lichtstrahls 21 an der Schichtstruktur der Vorform 22 breit aufgefächerte ursprünglich gemessene Licht-Intensitätsverteilung wie sie die Figuren 4 und 5 zeigen, ersetzt durch ein klares und eindeutiges Signal, das nur die Ablenkwinkelverteilung des Strahls nullter Ordnung wiedergibt.

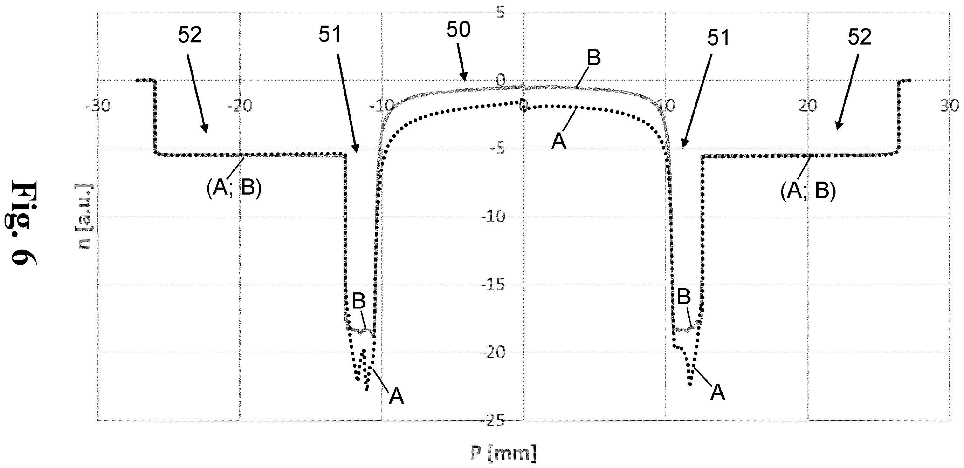

Anhand der so ermittelten Ablenkwinkelverteilung wird anhand der bekannten inversen Abel- Transformation das radiale Brechzahlprofils der Vorform ermittelt. Ein Beispiel dafür zeigt das Diagramm von **Figur 6****,** in dem die Brechzahl n (im Vergleich zu undotiertem Quarzglas, in relativen Einheiten) gegen die radiale Position P (in mm) aufgetragen ist. Die gemessene Vorform umfasst einen Kernbereich 50, einen inneren Mantelbereich 51 und einen äußeren Mantelbereich 52, wobei sich die Mantelbereiche in ihrem Brechungsindex unterscheiden. Das Diagramm enthält zwei Kurven. Die Kurve A zeigt ein anhand des Standes der Technik ermitteltes Brechzahlprofil und die Kurve B ein Brechzahlprofil, das anhand der Erfindung ermittelt worden ist. Dabei wurde die Vorform mit den Messwellenlängen 842 nm, 977 nm und 1080 nm abgescannt und die danach erhaltenen Intensitätsverteilungen wurden anhand des oben erläuterten ersten mathematischen Verarbeitungsschritts (Multiplikation ortgleicher Intensitätswerte) und des zweiten mathematischen Verarbeitungsschritts (Intensitäts-Schwellwertfilter bei 10% der Maximalintensität) überarbeitet. Das Brechzahlprofil der Vorform, wie es Kurve B wiedergibt, bietet eine gute Grundlage für die weitere Aufbereitung der Brechzahlverteilung, beispielsweise anhand üblicher Methoden, wie aus der EP 3 315 948 A1 beschrieben. Demgegenüber sind beim Brechzahlprofil von Kurve A die Brechzahlen im inneren Mantelbereich 51 und im Kernbereich 50 zu niedrig und das Stufenindex-Profil nicht deutlich ausgeprägt. Es zeigt sich, dass Verzerrungen auftreten, die durch die zugrundeliegende Mathematik auch das Kernniveau verschieben und deformieren können.

Bei nicht-radialsymmetrischen Brechzahlverteilungen erfolgt die Umrechnung aus der gemessenen Ablenkwinkelverteilung vorteilhafterweise nicht mittels der inversen Abel-Transformation, sondern mittels einer sogenannten inversen-Radon-Transformation. Dabei erfolgt die Aufbereitung der Ablenkwinkelverteilung wie oben anhand des Beispiels erläutert. Allerdings werden mehrere Ablenkwinkelverteilungen ermittelt, indem die Vorform um ihre Längsachse rotiert wird. Die jeweiligen Ablenkwinkelverteilungen werden zusammengefasst und in ein Phasendifferenz-Diagramm, dem sogenannten Sinogramm, umgerechnet. Die Anwendung der inversen Radon-Transformation auf letzteres ergibt eine 2D-Brechzahlverteilung.

## Patentansprüche

1. Verfahren zur Ermittlung eines Brechungsindexprofils eines optischen Gegenstandes (22), der eine zylinderförmige Oberfläche (26) und eine Zylinder-Längsachse (25) aufweist, mit folgenden Verfahrensschritten:
(a) Abscannen der zylinderförmigen Oberfläche (26) des Gegenstandes (22) an mehreren Abtastorten (23) mittels senkrecht zur Zylinder-Längsachse (25) auftreffender optischer Strahlen (21),
(b) Erfassen einer Strahlen-Intensitätsverteilung (40a, 40b, 40c) der im optischen Gegenstand (22) abgelenkten optischen Strahlen (21) mittels eines optischen Detektors (7; 8),
(c) Bestimmen der Ablenkwinkel der Strahlen nullter Ordnung (I₀), aus der Strahlen-Intensitätsverteilung (40a, 40b, 40c), umfassend ein Eliminieren von Ablenkwinkeln von Strahlen höherer Ordnung (I₁, I₂, I₃) aus der Strahlen-Intensitätsverteilung (40a, 40b, 40c), und
(d) Berechnen des Brechungsindexprofils des Gegenstandes (22) basierend auf den Ablenkwinkeln der Strahlen nullter Ordnung (lo),
**dadurch gekennzeichnet, dass** das Eliminieren von Ablenkwinkeln von Strahlen höherer Ordnung (I₁, I₂, I₃) eine Maßnahme umfasst, bei der die Verfahrensschritte (a) und (b) jeweils mit Strahlung unterschiedlicher Wellenlänge (λ₁, λ₂, λ₃) durchgeführt werden.

2. Verfahren nach Anspruch 1, **dadurch gekennzeichnet, dass** die Verfahrensschritte (a) und (b) mit Strahlung einer ersten Wellenlänge (λ₁) durchgeführt werden, wobei im Verfahrensschritt (b) eine erstes ortsabhängiges Licht-Intensitätsprofil (λ₁(p)) erhalten wird, und dass die Verfahrensschritte (a) und (b) mit Strahlung mindestens einer zweiten Wellenlänge (λ₂, λ₃) durchgeführt werden, wobei im Verfahrensschritt (b) mindestens ein zweites ortsabhängiges Licht-Intensitätsprofil (λ₂(p)) erhalten wird, und wobei ortsgleiche Intensitätswerte des ersten und zweiten Licht-Intensitätsprofils (λ₁(p), λ₂(p)) mathematisch miteinander verarbeitet werden.

3. Verfahren nach Anspruch 2, **dadurch gekennzeichnet, dass** die mathematische Verarbeitung eine Verarbeitung der Schnittmengen von ortsgleichen Intensitätswerten, insbesondere mindestens eine Multiplikation und/oder mindestens eine Addition der ortsgleichen Intensitätswerte des ersten und zweiten Licht-Intensitätsprofils (λ₁(p), λ₂(p)) umfasst.

4. Verfahren nach einem der Ansprüche 2 oder 3, **dadurch gekennzeichnet, dass** das Eliminieren von Ablenkwinkeln von Strahlen höherer Ordnung (I₁, I₂, I₃) eine Maßnahme umfasst, bei der Intensitätswerte des ersten, der zweiten und/oder eines aufbereiteten Licht-Intensitätsprofils (λ₁(p), λ₂(p)), die einen Intensität-Schwellwert (L) unterschreiten, ganz oder teilweise eliminiert werden.

5. Verfahren nach Anspruch 4, **dadurch gekennzeichnet, dass** der Intensität-Schwellwert (L) auf einen Wert gesetzt wird, der weniger als 20%, vorzugsweise weniger als 15%, eines maximalen Intensitätswertes des Licht-Intensitätsprofils (λ₁(p), λ₂(p)) beträgt.

6. Verfahren nach einem der vorhergehenden Ansprüche, **dadurch gekennzeichnet, dass** zum Erfassen der Strahlen-Intensitätsverteilung (40a, 40b, 40c) gemäß Verfahrensschritt (b) als optischer Detektor eine Zeilenkamera (7) mit nur einem lichtempfindlichen Zeilensensor (8) eingesetzt wird.

7. Verfahren nach Anspruch 6, **dadurch gekennzeichnet, dass** ein monochromatischer Zeilensensor eingesetzt wird, der vorzugsweise mit einer Farbtiefe von 8 Bit betrieben wird, und der besonders bevorzugt eine Länge von mindestens 40 mm, vorzugsweise mindestens 60 mm aufweist.

8. Verfahren nach einem der vorhergehenden Ansprüche, **dadurch gekennzeichnet, dass** zum Abscannen der zylinderförmigen Oberfläche (26) gemäß Verfahrensschritt (a) der optische Strahl (21) mittels Parabolspiegeln (5) fokussiert wird.

9. Verfahren nach einem der vorhergehenden Ansprüche, **dadurch gekennzeichnet, dass** die Verfahrensschritte (a) und (b) mit Strahlung einer ersten Wellenlänge (λ₁) und mindestens einer zweiten Wellenlänge (λ₂, λ₃) durchgeführt werden, wobei sich die erste Wellenlänge (λ₁) und die zweite Wellenlänge (λ₂, λ₃) um mindestens 50 nm und um maximal 400 nm, und vorzugsweise um mindestens 80 nm und um maximal 300 nm voneinander unterscheiden.

10. Verfahren nach Anspruch 9, **dadurch gekennzeichnet, dass** die Verfahrensschritte (a) und (b) mit Strahlung der ersten Wellenlänge (λ₁) und anschließend mit Strahlung der zweiten Wellenlänge (λ₂, λ₃) durchgeführt werden.

11. Verfahren nach Anspruch 9 oder 10, **dadurch gekennzeichnet, dass** die Verfahrensschritte (a) und (b) mit Strahlung der ersten Wellenlänge (λ₁), der zweiten Wellenlänge (λ₂) und einer dritten Wellenlänge (λ₃) durchgeführt werden, wobei die dritte Wellenlänge (λ₃) länger als die erste und kürzer als die zweite Wellenlänge ist, und sich die dritte Wellenlänge (λ₃) von der ersten und von der zweiten Wellenlänge um mindestens 50 nm und um maximal 400 nm, und vorzugsweise um mindestens 80 nm und um maximal 300 nm unterscheidet.

12. Verfahren nach einem der vorhergehenden Ansprüche, **dadurch gekennzeichnet, dass** die unterschiedlichen Wellenlängen (λ₁, λ₂, λ₃) im Wellenlängenbereich von 400 bis 1.600 nm, und vorzugsweise unterhalb von 1.100 nm liegen.

13. Verfahren nach einem der vorhergehenden Ansprüche, **dadurch gekennzeichnet, dass** die unterschiedlichen Wellenlängen (λ₁, λ₂, λ₃) ausgewählt sind aus den Wellenlängenbereichen: 840 ±50 nm, 970 ±50 nm, 1040 ±50 nm.

14. Verfahren nach einem der vorhergehenden Ansprüche, **dadurch gekennzeichnet, dass** die Strahlen (21) beim Abscannen der zylinderförmigen Oberfläche (26) des Gegenstandes (22) auf einen Punkt (25) im optischen Gegenstand fokussiert werden.

15. Verfahren nach einem der vorhergehenden Ansprüche, **dadurch gekennzeichnet, dass** das Eliminieren von Ablenkwinkeln von Strahlen höherer Ordnung (I₁, I₂, I₃) aus der Strahlen-Intensitätsverteilung (40a, 40b, 40c) gemäß Verfahrensschritt (b) mittels rechnergestützter Bildverarbeitung erfolgt.
